# EUROPÄISCHE PATENTSCHRIFT

(11) **EP 0 945 758 B1**
(45) Veröffentlichungstag und Bekanntmachung des Hinweises auf die Patenterteilung: **20.10.2004**
(21) Anmeldenummer: 99105221.8
(22) Anmeldetag: 13.03.1999
(51) Int. Cl.: G03C 1/79, B29C 47/88

(54) **Trägermaterial mit niedrigem Pitsniveau**
Support material with few pits
Matériau de support à bas niveau de fosses

(30) Priorität: 21.03.1998 DE 19812445
(43) Veröffentlichungstag der Anmeldung: 29.09.1999
(73) Patentinhaber: Felix Schoeller jr Foto- und Spezialpapiere GmbH & Co. KG, 49086 Osnabrück (DE)
(72) Erfinder: Raabe, Günter, Dipl.-Ing., 49124 Georgsmarienhütte (DE)
(74) Vertreter: COHAUSZ & FLORACK

(56) Entgegenhaltungen:
- EP-A- 0 737 889
- JP-A- 1 166 036
- US-A- 4 875 262
- US-A- 5 212 005

## Beschreibung

Die Erfindung betrifft ein kunststoffbeschichtetes Papier, insbesondere ein Trägermaterial für fotografische und nichtfotografische Bebilderungsverfahren. Darüber hinaus betrifft sie ein Verfahren zur Herstellung des genannten Trägermaterials.

Bei der Veredelung von Papieren durch flächiges Verbinden mit mindestens einer Kunststoffschicht in einem Extrusions- oder Coextrusionsverfahren sollen Aussehen und Eigenschaften des Grundmaterials verbessert werden. Dies gilt insbesondere für die Erhöhung von Steifigkeit, Reißfestigkeit, Temperaturbeständigkeit und Unempfindlichkeit gegen Flüssigkeiten oder Gasen. Durch Einsatz von speziellen Walzen lassen sich glänzende oder strukturierte Oberflächen herstellen.

Die als Granulat, Grieß oder Pulver vorliegende Extrusionsmasse wird im Extruder verdichtet, aufgeschmolzen und homogenisiert. Mittels einer Düse, die in der Breite der Papierbahn angepaßt ist, wird die flüssige Extrusionsmasse auf die Unterlage aufgebracht. Zur Erzielung einer guten Verbundhaftung wird das Papier vorbehandelt. Zur Haftverbesserung werden Flammenvorbehandlung, Koronavorbehandlung, Ozondusche oder Primerauftrag angewendet. Der extrudierte Film wird mittels eines Kühlzylinders abgekühlt. Die Oberfläche dieses Kühlzylinders bestimmt auch maßgeblich die Oberfläche des Materialverbundes.

Die Extrusion von Papier und insbesondere von Papieren für fotografische und nichtfotografische Bebilderungsverfahren wird aus unterschiedlichen Gründen durchgeführt. Der aufextrudierte Film verhindert die Aufnahme von Flüssigkeiten, bei Fotopapieren die Aufnahme von Entwicklerlösungen und gewährleistet somit eine schnelle, umweltschonende Verarbeitung, da eingedrungener Entwickler nicht langwierig ausgewaschen werden muß. Die Struktur der Oberfläche kann gezielt von "hochglänzend" bis "stark strukturiert" den jeweils gewünschten Anforderungen angepaßt werden. Die struktrurierte Oberfläche des Materialverbunds zeigt dabei ein Spiegelbild des Kühlzylinders. Die bisher bei der Extrusion von Papier verwendeten Kühlzylinder werden durch Verchromung des Kühlzylinderkörpers und anschließende Strahlbehandlung hergestellt. Dadurch entsteht eine Vielzahl von meist feinen Vertiefungen auf der Kühlzylinderoberfläche. Je nach Art und Größe des Strahlmaterials und Zeitdauer der Einwirkung können Oberflächen von "hochglänzend" bis "sehr matt" erzeugt werden.

Bei der Extrusionsbeschichtung von Papier entstehen in Abhängigkeit von der Extrusionsgeschwindigkeit kraterförmige Oberflächenstörungen, sogenannte "Pits" auf der Polymeroberfläche. Durch die hohe Umdrehungsgeschwindigkeit des Kühlzylinders können Luftbläschen, die sich in den oben genannten Vertiefungen der Kühlzylinderoberfläche festgesetzt haben, vor dem Kontakt des Kühlzylinders mit der heißen Extrusionsmasse nicht entweichen oder entfernt werden. Die dadurch entstehenden Pits wirken sich negativ auf den Glanz und das visuelle Erscheinungsbild aus. Mit Zunahme der Extrusionsgeschwindigkeit erhöht sich auch die Anzahl der Pits in der erhaltenen Beschichtung. Diese Problematik beschreibt die EP 0 285 146.

Die japanische Offenlegungsschrift 7261325 beschreibt ein polyolefinbeschichtetes Fototrägermaterial mit einer genau definierten Oberflächenrauhigkeit zur Vermeidung der Pits bei einer Produktionsgeschwindigkeit von wenigstens 150m/min. Dieses Fototrägermaterial zeichnet sich durch einen hohen Glanz und geringe Pitsanzahl aus. Nachteilig ist der enge Rauhigkeitsbereich des Produkts. Auch eine Anhebung der Produktionsgeschwindigkeit ist nur im begrenztem Maße möglich.

Die EP 0 285 146 A2 beschreibt ein Verfahren zur Vermeidung von Pits bzw. Kratern, in dem die Luftbläschen in den Vertiefungen des Kühlzylinders durch ein Gas ersetzt werden, das leichter durch den extrudierten Film entweichen kann. Nachteilig ist auch hier die niedrige Produktionsgeschwindigkeit und der hohe technische Aufwand.

Bei der US 4 994 357 wird eine Verminderung der Pits durch eine Erhöhung des Anpreßdrucks des polyolefinbeschichteten Papiers an den Kühlzylinder erreicht. Durch Einsatz eines besonders glatten Basispapiers und einer mehrlagigen Beschichtung der Oberfläche mit Polyolefin sollen weitere Verbesserungen erzielt werden. Durch den hohen Anpreßdruck ist aber nur eine niedrige Produktionsgeschwindigkeit möglich, da sich bei höheren Geschwindigkeiten das Polyolefin vom Kühlzylinder ablösen kann.

Die US 4 875 262 betrifft ein Verfahren zur Herstellung eines harzbeschichteten Fotobasispapiers unter Anwendung eines sowohl elektrolytisch als auch mechanisch structurierten Kühlzylinders.

Die JP 166036 A1 betrifft ein Verfahren zur Herstellung eines harzbeschichteten Fotobasispapiers unter Anwendung eines herkömmlichen mechanisch strukturierten Kühlzylinders.

Neben dem Fototrägermaterial ist auch der Bereich der nichtfotografischen Bebilderungsverfahren wie Ink-Jetoder Thermotransferverfahren auf ein gleichmäßiges Trägermaterial angewiesen. Um auch bei diesen Verfahren möglichst fotoähnliche Ausdrucke zu erhalten, werden in verstärktem Maß kunststoffbeschichtete Papiere eingesetzt. Störungen in der Oberfläche wie Pits machen sich durch den geringeren Kunststoffauftrag sehr stark als Glanzflecken bemerkbar.

Es ist Aufgabe der Erfindung, ein kunststoffbeschichtetes Trägermaterial bereitzustellen, das sich durch gleichmäßige Oberflächeneigenschaften und ein niedriges Pitsniveau auszeichnet. Darüber hinaus ist es Aufgabe der Erfindung, die Herstellungsgeschwindigkeit bei Wahrung eines niedrigen Pitsniveaus zu erhöhen.

Gelöst werden diese Aufgaben durch ein mit Polyolefin beschichtetes Papierträgermaterial, dessen Oberfläche eine Standardabweichung der Rauhigkeit Rz von 0,050 µm bis 0,120 µm aufweist. Dieses Papierträgermaterial ist erhältlich durch ein Verfahren, in dem man ein Polyolefin auf eine Unterlage extrudiert und die Polyolefinoberfläche mit einem Kühlzylinder formt, der eine elektrolytisch aufgebaute strukturierte Oberfläche mit einer Standardabweichung der Rauhigkeit Rz von 0,050 µm bis 0,120 µm aufweist.

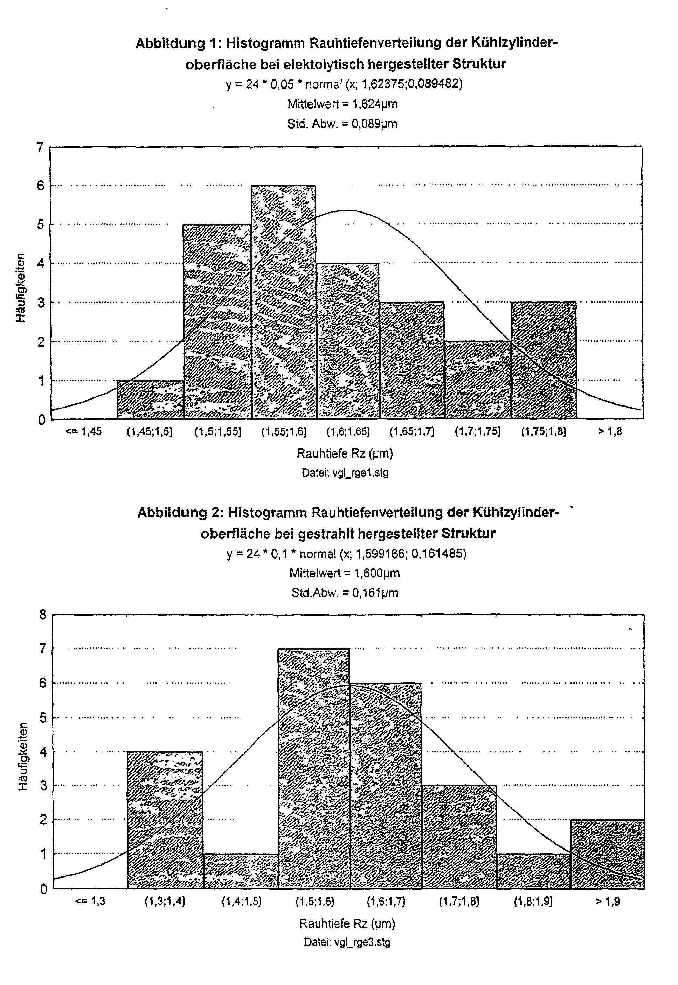

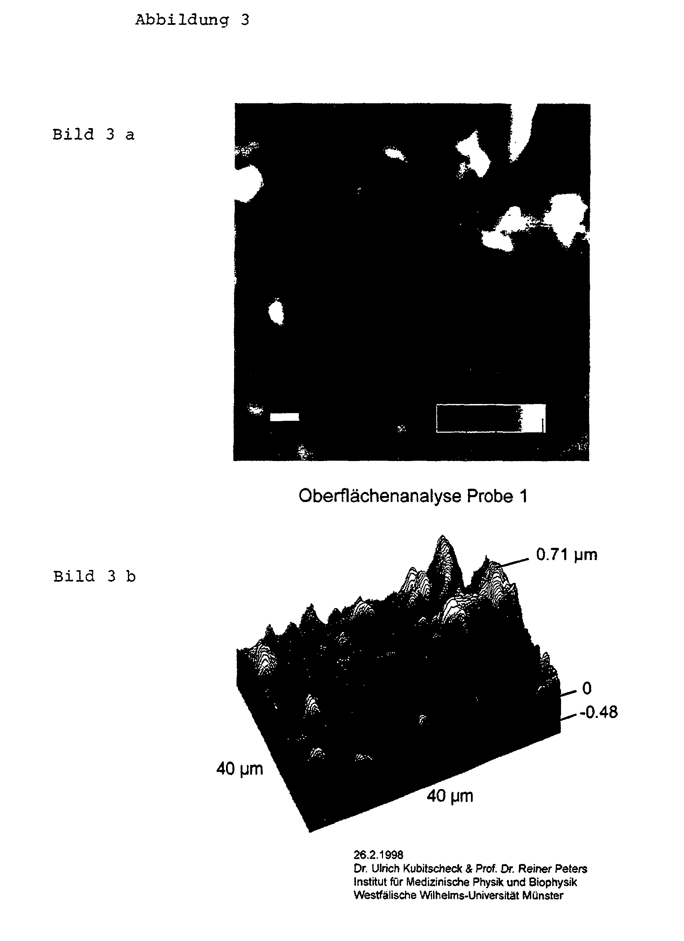

Bei der Herstellung des erfindungsgemäßen Trägermaterials werden Zylinder eingesetzt, die nach der Verchromung zur Oberflächenbehandlung nicht gestrahlt werden. Durch gezielte Richtungsumkehrungen des elektrischen Stroms während der Galvanisierung lassen sich gezielt Oberflächenstrukturen aufbauen. Dabei handelt es sich um gleichmäßig verteilte, abgerundete Erhebungen. Dadurch unterscheidet sich dieser Kühlzylindertyp spiegelbildlich von den bisherigen Kühlzylindertypen, bei denen die Oberfläche durch einen Materialabbau entsteht. Die Kühlzylinder für das erfindungsgemäße Trägermaterial haben im Vergleich zu den herkömmlichen Kühlzylindern eine gleichmäßige Rauhtiefenverteilung Rz, wie aus den Standardabweichungen der Abbildungen 1 und 2 zu sehen ist. Die Standardabweichungen dieser Kühlzylinder liegen in dem Bereich zwischen 0,050 µm und 0,120 µm, vorzugsweise bei 0,060 µm bis 0,100 µm. Dadurch erhält man bei der Extrusion eine Oberfläche mit einem gleichmäßigen Glanz. Bereiche mit unterschiedlichen Glanzwerten auf der Trägermaterialoberfläche, wie bei herkömmlichen Kühlzylindern, treten erfindungsgemäß nicht mehr auf. Die Rauhigkeit Rz des Kühlzylinders richtet sich nach den gewünschten Glanzwerten des Trägermaterials und beträgt 0,800 µm bis 1,900 µm, insbesondere 1,000 µm bis 1,700 µm.

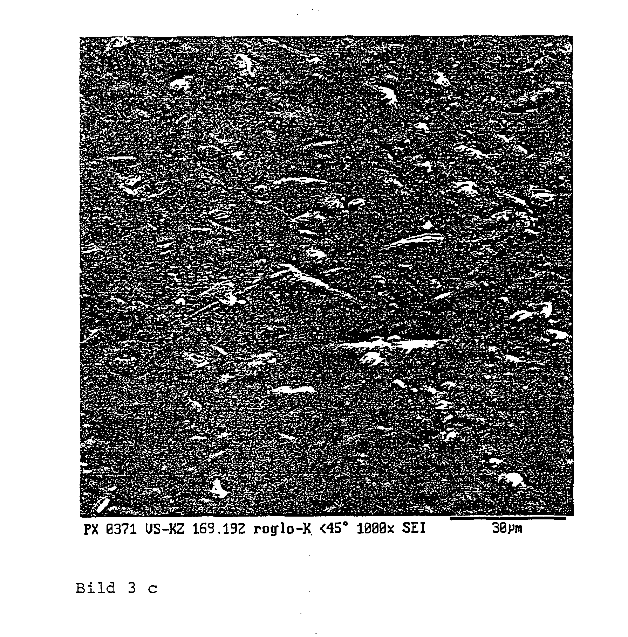

Die Abbildung 3, Bild 3a und 3b zeigen eine Papieroberfläche (entsprechend Vergleichsbeispiel 1), die mit einem herkömmlichen, gestrahlten Zylinder hergestellt wurde. Die Aufnahmen wurden mit einem konfukalen Lasermikroskop aufgenommen. Bild 3b zeigt eine dreidimensionale Darstellung der Papieroberfläche. Auffällig ist die große Anzahl der Vertiefungen in der Papieroberfläche. Dadurch erhöht sich die Zahl der Lufteinschlüsse mit steigender Extrusionsgeschwindigkeit und damit die Anzahl der Pits. Bild 3a zeigt eine Aufsicht auf die 3D Darstellung, die der Lasermikroskop-Aufnahme Abbildung 3c aus Vergleichsbeispiel 1 entspricht.

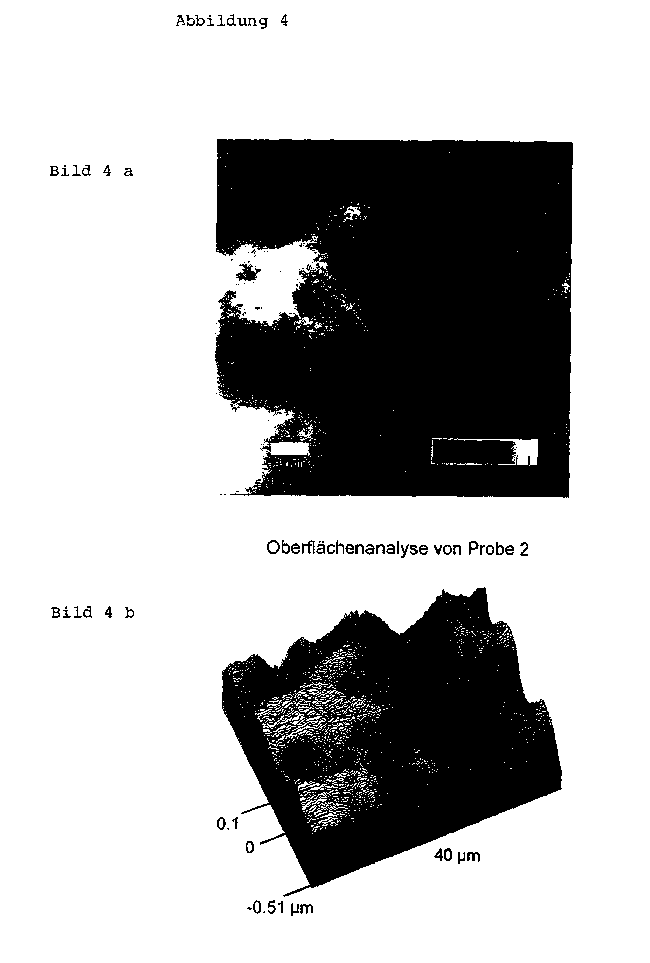

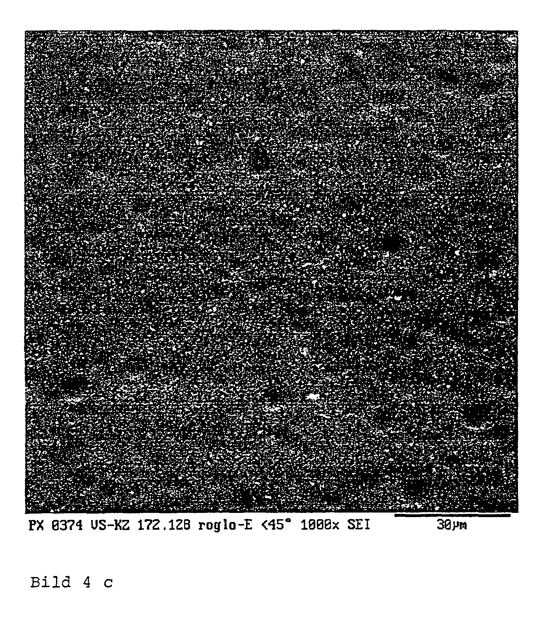

Abbildung 4, Bild 4a und 4b zeigen eine Papieroberfläche (entsprechend Beispiel 1), die mit einem Kühlzylinder mit elektrolytisch aufgebauter Oberflächenstruktur produziert worden ist. Die Aufnahmen wurden ebenfalls mit einem konfukalen Lasermikroskop unter den gleichen Bedingungen wie bei Abbildung 3 aufgenommen. Bild 4b zeigt wieder eine dreidimensionale Darstellung der Papieroberfläche.

Die Oberfläche des Papiers ist homogener als in Abbildung 3b, die Höhenunterschiede sind von den flächigen Abmessungen größer und gleichzeitig abgerundet. Dadurch kann die Luft auch bei hohen Produktionsgeschwindigkeiten leicht entweichen. Die Bildung von Pits wird vermindert.

Bild 4a zeigt die Aufsicht auf Bild 4b und ist mit der Lasermikroskop-Aufnahme Abbildung 4c vergleichbar.

Bei dem erfindungsgemäßen Trägermaterial liegt der Glanz, gemessen bei einem Winkel von 60°, im Bereich von 4% bis 40%, insbesondere im Bereich von 10% bis 35%. Nach dem Auftrag einer fotografischen Emulsion oder einer Empfangsschicht liegt der Glanz, gemessen bei einem Winkel von 60° am Schwarzmuster, im Bereich von 75 bis 95%, insbesondere 80 bis 90%. Die Rauhigkeit Rz des Trägermaterials liegt im Bereich von 0,700 µm bis 1,800 µm, insbesondere 0,900 µm bis 1,600 µm. Die Standardabweichung der Rauhigkeit Rz des Trägermaterials ist mit der Standardabweichung der Rauhigkeit Rz des Kühlzylinders identisch und liegt im Bereich von 0,050 µm bis 0,120 µm.

Zur Herstellung des Basispapiers eignen sich alle Sorten von Cellulosefasern sowie synthetische Fasern. Es kann Nadelholz- und/oder Laubholzzellstoff eingesetzt werden, der durch alkalische oder saure Verfahren aufgeschlossen wurde. Zur Leimung eignen sich alle in der Papierindustrie bekannten Leimungsmittel und Naßfestmittel. Als Pigmente eignen sich anorganische Verbindungen wie Clay, Kaolin, Calciumcarbonat und Titandioxid. Das Basispapier kann weitere Hilfsstoffe wie Entschäumer, optischen Aufheller und Farbstoff enthalten. Es kann auf einer Fourdrinier- oder Zylinder-Papiermaschine hergestellt werden. Das bevorzugte Gewicht des Basispapiers liegt bei 40 bis 250 g/m².

Für die Extrusion sind Polyolefine wie Polyethylen, Polypropylen und Polybuten, Copolymere von zwei oder mehr Olefinen oder Mischungen davon geeignet. Besonders geeignet sind alle Sorten von Polyethylen wie High Density Polyethylen (HDPE), Low Density Polyethylen (LDPE), Linear Low Density Polyethylen (LLDPE) und Mischungen davon. Das Polyolefin kann Pigmente wie Titandioxid, Clay, Calciumoxid oder Zinkoxid enthalten. Der Anteil des Pigments liegt bei 5 bis 25 Gew.%. Der Gesamtauftrag liegt bei 10 bis 50 g/m².

Weitere Zusätze sind Hilfsstoffe wie optische Aufheller, Farbstoffe und Antioxidantien. Zur Beschichtung sind Extrusions- und Coextrusionsverfahren geeignet. Die Rückseite des Fototrägermaterials kann mit Funktionsstrichen wie Antistatikschicht oder Non-Curling-Schicht versehen sein.

Das Polyolefin wird in Form eines Films durch einen Spalt zwischen einer Anpreßwalze und einen erfindungsgemäß eingesetzten Kühlzylinder auf die Unterlage, beispielsweise Papierunterlage, extrudiert. Durch den Kühlzylinder wird der heiße Polyolefinfilm abgekühlt und das Ablösen des Films vom Zylinder ermöglicht. Nach der Beschichtung der Rückseite erfolgt in gleicher Weise die Beschichtung der Vorderseite.

Die Extrusionsgeschwindigkeit von anfangs 275 m/min konnte bis auf 375 m/min gesteigert werden. Durch Erhöhung des Anpreßdrucks und Einsatz von harten Anpreßwalzen kann die Geschwindigkeit noch weiter gesteigert werden.

Die folgenden Beispiele dienen der weiteren Erläuterung der Erfindung.

### Beispiel 1

Ein Fotobasispapier mit einem Flächengewicht von 168 g/m² wurde auf der Rückseite mit einer pigmentfreien Polyethylenmischung mit einem Polyolefin niedriger Dichte (LDPE, d=0,915 g/cm³) und einem Polyethylen hoher Dichte (HDPE, d=0,959 g/cm³) beschichtet. Das Auftragsgewicht betrug 29 g/m². Die Vorderseite des Papiers wurde mit einer Mischung aus einem Polyethylen niedriger Dichte (LDPE, 0,932 g/m³) und 15 Gew.% Titandioxid beschichtet. Der Auftrag betrug 28 g/m². Die Beschichtungsgeschwindigkeit betrug zunächst 275 m/min und wurde auf 375 m/min gesteigert. Der Kühlzylinder mit der elektrolytisch gestalteten Oberfläche hatte eine Rauhigkeit Rz von 1,624 µm und eine Standardabweichung der Rauhigkeit von 0,089 µm (Abbildung 1).

Die Rasterelektronenmikroskop-Aufnahme Abbildung 4d zeigt die Oberflächenstruktur des Fototrägermaterials bei einer Beschichtungsgeschwindigkeit von 275 m/min. Das Trägermaterial hatte nach der Polyolefinbeschichtung eine Rauhigkeit Rz von 1,532 µm und eine Standardabweichung der Rauhigkeit von 0,085 µm.

### Beispiel 2

Ein Fotobasispapier mit einem Flächengewicht von 220 g/m² wurde mit den in Beispiel 1 beschriebenen Polyethylenmischungen beschichtet. Das Auftragsgewicht der Rückseitenbeschichtung betrug 35 g/m². Das Auftragsgewicht der Oberflächenbeschichtung betrug 33 g/m². Der Kühlzylinder mit einer elektrolytisch gestalteten Oberfläche hatte eine Rauhigkeit Rz von 0,995 µm und eine Standardabweichung von 0,064 µm. Die Beschichtungsgeschwindigkeit betrug zunächst 275 m/min und wurde auf 375 m/min gesteigert. Das Trägermaterial hatte nach der Polyolefinbeschichtung eine Rauhigkeit Rz von 0,875 µm und eine Standardabweichung von 0,062 µm.

### Beispiel 3

Ein Ink-Jet-Trägerpapier mit einem Flächengewicht von 140 g/m² wurde mit den in Beispiel 1 beschriebenen Polyethylenmischungen beschichtet. Das Auftragsgewicht der Oberflächen- und der Rückseitenbeschichtung betrug jeweils 17 g/m². Der Kühlzylinder mit einer elektrolytisch gestalteten Oberfläche hatte eine Rauhigkeit Rz von 1,341 µm und eine Standardabweichung von 0,098 µm. Die Beschichtungsgeschwindigkeit betrug zunächst 275 m/min und wurde auf 375 m/min gesteigert. Das Trägermaterial hatte nach der Polyolefinbeschichtung eine Rauhigkeit Rz von 1,229 µm und eine Standardabweichung von 0,096 µm.

### Beispiel 4

Ein Fotobasispapier mit einem Flächengewicht von 168 g/m² wurde mit den in Beispiel 1 beschriebenen Polyethylenmischungen beschichtet. Das Auftragsgewicht der Rückseitenbeschichtung betrug 29 g/m². Das Auftragsgewicht der Oberflächenbeschichtung betrug 28 g/m². Der Kühlzylinder mit einer elektrolytisch gestalteten Oberfläche hatte eine Rauhigkeit Rz von 1,605 µm und eine Standardabweichung von 0,101 µm. Die Beschichtungsgeschwindigkeit betrug zunächst 275 m/min und wurde auf 375 m/min gesteigert. Das Trägermaterial hatte nach der Polyolefinbeschichtung eine Rauhigkeit Rz von 1,463 µm und eine Standardabweichung von 0,098 µm.

### Vergleichsbeispiel 1

Das Fotobasispapier aus Beispiel 1 wurde mit den in Beispiel 1 beschriebenen Polyethylenmischungen beschichtet. Der Kühlzylinder mit einer gestrahlten Oberfläche hatte eine Rauhigkeit Rz von 1,600 µm und eine Standardabweichung von 0,161 µm (Abb. 2). Die Beschichtungsgeschwindigkeit betrug anfangs 275 m/min und wurde auf 375 m/min gesteigert. Die Rasterelektronenmikroskop-Aufnahme in Abbildung 3d zeigt die Oberflächenstruktur des erfindungsgemäßen Trägermaterials einer Rauhigkeit Rz von 1,487 µm und einer Standardabweichung von 0,159 µm nach der Polyolefinbeschichtung.

### Vergleichsbeispiel 2

Das Ink-Jet-Papier aus Beispiel 3 wurde mit den in Beispiel 1 beschriebenen Polyethylenmischungen beschichtet. Der Kühlzylinder mit einer gestrahlten Oberfläche hatte eine Rauhigkeit Rz von 1,287 µm und eine Standardabweichung von 0,139 µm. Die Beschichtungsgeschwindigkeit betrug anfangs 275 m/min und wurde auf 375 m/min gesteigert. Das Trägermaterial hatte nach der Polyolefinbeschichtung eine Rauhigkeit Rz von 1,181 µm und eine Standardabweichung von 0,149 µm.

### Bestimmung der Rauhigkeit

Die Rauhigkeit Rz wird mit einem Hommel-Oberflächenabtaster nach DIN 4768 durchgeführt.

### Prüfung der Pitsanzahl

Da die Pits mit bloßen Augen in dieser Produktionsstufe nicht zu erkennen sind, wird die Oberfläche des polyolefinbeschichteten Papiers mit einem Mikroskop vergrößert und mit einer CCD Kamera abgetastet. Mittels eines Bildverarbeitungsprogramms wird ein Profil des Pits -Niveaus aus 30 Meßstellen erstellt. In der Tabelle 3 sind die Mittelwerte der 30 Meßstellen dargestellt.

### Glanzmessung

Die Glanzmessung erfolgte mit einem Dreiwinkelglanzmeßgerät der Dr. Bruno Lange GmbH nach DIN 67530 bei einem Winkel von 60°. Da die Qualität der glänzenden Oberfläche erst am emulsionierten bzw. mit einer Empfangsschicht versehenen Papier deutlich zu erkennen ist, wurde das Trägermaterial entsprechend beschichtet.

Das Fototrägermaterial aus den Beispielen 1,2,4 und dem Vergleichsbeispiel 1 wurde mit einer normalen Silberchloridemulsion beschichtet, belichtet und zu einem Schwarzblatt entwickelt.

Bei Beispiel 3 und Vergleichsbeispiel 2 wurde das Trägermaterial mit einer Tintenempfangsschicht, wie in der DE 195 35 072 C2 beschrieben, beschichtet. Die Tintenempfangsschicht wurde mittels eines Hewlett Packard Druckers, HP 550C, tiefschwarz bedruckt.

Darüber hinaus wurden auch die Glanzwerte am Trägermaterial ohne zusätzliche Schicht gemessen, da diese Werte für die Produktionssteuerung wichtig sind.

Die Prüfergebnisse sind in den Tabellen 1 und 2 zusammengefaßt.

**Tabelle 1**

| **Glanzmessung** Fototrägermaterial ohne Emulsion/Empfangsschicht Glanzwerte in % | | | | | | |
|---|---|---|---|---|---|---|
| Produktions-Geschwindigkeit | B1 | B2 | B3 | B4 | V1 | V2 |
| 275 m/min | 24,5 | 30,2 | 23,9 | 10,7 | 23,0 | 22,2 |
| 300 m/min | 24,2 | 29,9 | 24,2 | 11,0 | 23,5 | 22,5 |
| 350 m/min | 25,1 | 30,6 | 23,6 | 10,5 | 23,7 | 21,8 |
| 375 m/min | 24,8 | 30,2 | 23,9 | 10,6 | 22,8 | 22,9 |

**Tabelle 2**

| **Glanzmessung** Fototrägermaterial mit Emulsion/Empfangsschicht Glanzwerte in % | | | | | | |
|---|---|---|---|---|---|---|
| Produktions-Geschwindigkeit | B1 | B2 | B3 | B4 | V1 | V2 |
| 275 m/min | 81,7 | 84,3 | 80,2 | 80,5 | 78,8 | 77,1 |
| 300 m/min | 81,4 | 84,0 | 79,8 | 80,8 | 77,8 | 76,2 |
| 350 m/min | 82.0 | 84,9 | 81,0 | 80,3 | 77,5 | 76,5 |
| 375 m/min | 81,5 | 85,1 | 80,5 | 81,0 | 78,6 | 76,0 |

**Tabelle 3**

| **Pitsmessung** Anzahl der Pits | | | | | | |
|---|---|---|---|---|---|---|
| Produktions-Geschwindigkeit | B1 | B2 | B3 | B4 | V1 | V2 |
| 275 m/min | 13 | 11 | 18 | 10 | 47 | 55 |
| 300 m/min | 27 | 25 | 30 | 19 | 53 | 64 |
| 350 m/min | 36 | 33 | 41 | 28 | 61 | 79 |
| 375 m/min | 45 | 44 | 52 | 37 | 87 | 95 |

Die Ergebisse aus den Tabellen 1 bis 3 zeigen, das mit dem Einsatz eines Kühlzylinders mit elektrolytisch aufgebauter Oberfächenstruktur ein Trägermaterial mit hohem Glanz und niedriger Pitsanzahl bei deutlich erhöhten Produktionsgeschwindigkeiten hergestellt werden kann.

## Patentansprüche

1. Polyolefinbeschichtetes Papierträgermaterial, dessen Oberfläche eine Standardabweichung der Rauhigkeit Rz von 0,050 µm bis 0,120 µm aufweist, erhältlich nach dem Verfahren des Anspruchs 7.

2. Polyolefinbeschichtetes Papierträgermaterial nach Anspruch 1, **dadurch gekennzeichnet, daß** die Rauhigkeit Rz der Oberfläche des Trägermaterials 0,700 bis 1,800 µm beträgt.

3. Polyolefinbeschichtetes Papierträgermaterial nach Anspruch 2, **dadurch gekennzeichnet, daß** die Rauhigkeit Rz der Oberfläche des Trägermaterials 0,900 bis 1,600 µm beträgt.

4. Polyolefinbeschichtetes Papierträgermaterial nach Anspruch 1 bis 3, **dadurch gekennzeichnet, daß** der Glanz der Oberfläche des Trägermaterials bei einem Meßwinkel von 60° 4% bis 40% beträgt.

5. Polyolefinbeschichtetes Papierträgermaterial nach Anspruch 4, **dadurch gekennzeichnet, daß** Glanz der Oberfläche des Trägermaterials bei einem Meßwinkel von 60° 10% bis 35 % beträgt.

6. Polyolefinbeschichtetes Papierträgermaterial nach Anspruch 1 bis 5, **dadurch gekennzeichnet, daß** das Trägermaterial ein Trägermaterial für fotografische und nichtfotografische Bebilderungsverfahren ist.

7. Verfahren zur Herstellung eines polyolefinbeschichteten Papierträgermaterials, **dadurch gekennzeichnet, daß** man ein Polyolefin auf eine Unterlage extrudiert und die Polyolefinoberfläche mit einem Kühlzylinder formt, der eine elektrolytisch aufgebaute strukturierte Oberfläche mit einer Standardabweichung der Rauhigkeit Rz von 0,050 µm bis 0,120 µm aufweist.

## Claims

1. A polyolefin-coated support material the surface of which exhibits a standard deviation of roughness Rz of 0,050 µm to 0,120 µm obtainable by the process according to claim 7.

2. A polyolefin-coated support material according to claim 1, wherein the roughness Rz of the surface of the support material is 0.700 to 1.800 µm.

3. A polyolefin-coated support material according to claim 2, wherein the roughness Rz of the surface of the support material is 0.900 to 1.600 µm.

4. A polyolefin-coated support material according to claims 1 to 3, wherein the gloss of the surface of the support material at a measurement angle of 60° is 4% to 40%.

5. A polyolefin-coated support material according to claim 4, wherein the gloss of the surface of the support material at a measurement angle of 60° is 10% to 35%.

6. A polyolefin-coated support material according to claim 1, wherein the support material is a support material for photographic and non-photographic imaging processes.

7. A method of producing a polyolefin-coated support material, wherein a polyolefin is extruded onto a substrate, and the polyolefin surface is shaped with a chill roll having an electrolytically structured surface with a standard deviation of the roughness Rz of 0.050 µm to 0.120 µm.

## Revendications

1. Matériau de support en papier revêtu de polyoléfine, dont la surface présente un écart-type de la rugosité Rz de 0,050 µm à 0,120 µm et que l'on peut obtenir selon le procédé de la revendication 7.

2. Matériau de support en papier revêtu de polyoléfine selon la revendication 1, **caractérisé en ce que** la rugosité Rz de la surface du matériau de support est comprise entre 0,700 et 1,800 µm.

3. Matériau de support en papier revêtu de polyoléfine selon la revendication 2, **caractérisé en ce que** la rugosité Rz de la surface du matériau de support est comprise entre 0,900 et 1,600 µm.

4. Matériau de support en papier revêtu de polyoléfine selon les revendications 1 à 3, **caractérisé en ce que** le brillant de la surface du matériau de support sous un angle de mesure de 60° est compris entre 4 % et 40 %.

5. Matériau de support en papier revêtu de polyoléfine selon la revendication 4, **caractérisé en ce que** le brillant de la surface du matériau de support sous un angle de mesure de 60° est compris entre 10 % et 35 %.

6. Matériau de support en papier revêtu de polyoléfine selon les revendications 1 à 5, **caractérisé en ce que** le matériau de support est un matériau de support pour des procédés photographiques et non-photographiques de formation d'image.

7. Procédé de fabrication d'un matériau de support en papier revêtu de polyoléfine, **caractérisé en ce que** l'on extrude une polyoléfine sur une sous-couche, et **en ce que** l'on structure la surface de polyoléfine avec un cylindre de refroidissement qui présente une surface structurée obtenue par des moyens électrolytiques, avec un écart-type de la rugosité Rz de 0,050 µm à 0,120 µm.
